# EUROPÄISCHE PATENTANMELDUNG

(11) **EP 1 605 240 A1**
(43) Veröffentlichungstag der Anmeldung: **14.12.2005**
(21) Anmeldenummer: 04013555.0
(22) Anmeldetag: 09.06.2004
(51) Int. Cl.: G01L 1/14, G01L 5/22, G06F 3/033

(54) **Textiler Drucksensor**

(71) Anmelder: ETH Zürich, ETH Transfer, 8092 Zürich (CH)
(72) Erfinder: Meyer, Jan, 3074 Muri (CH); Tröster, Gerhard, 8600 Dübendorf (CH); Kirstein, Tünde, 8953 Dietikon (CH)
(74) Vertreter: Kley, Hansjörg

(57) **Zusammenfassung**

Zur differenzierten Erfassung einer Druckverteilung auf eine Fläche wird ein textiler Drucksensor (1) vorgeschlagen, der gebildet wird aus einer ersten flächigen Elektrode (10) und einer Mehrzahl von weiteren, gegenüber der ersten Elektrode (10) angeordneten und durch ein elastisches Material (11) individuell gehaltenen, weiteren Elektroden (12). Dabei sind die weiteren Elektroden (12) bezüglich der ersten flächigen Elektrode (10) disjunkt angeordnet. Pro Elektrode (12) ist eine Verbindungsleitung (14) vorgesehen, um Kapazitätsänderungen des durch die erste Elektrode (10) und der weiteren Elektrode (12) gebildeten Kondensators durch eine externe Messelektronik auszuwerten. Solche textile Drucksensoren (1) sind insbesondere für das Einnähen in Anti-Decubitus-Kleidungsstücke vorgesehen.

## Beschreibung

Die vorliegende Erfindung bezieht sich auf einen textilen Drucksensor gemäss dem Oberbegriff des Patentanspruches 1.

Das Gebiet der textilen Drucksensoren umfasst einen weiten Anwendungsbereich. Insbesondere für bettlägerige oder behinderte Personen ist es wünschenswert, für Anti-Decubitus-Kleidung über einen wiederverwendbaren Drucksensoren aufweisenden Stoff zu verfügen. Damit können das Entstehen von solchen Druckstellen rechtzeitig erkannt werden.

In EP 1 211 633 A1 [1] ist ein gitterartiger textiler Drucksensor offenbart. Dieser wird gebildet aus einer elastischen dielektrischen Schicht und mehreren zueinander orthogonal stehenden Elektrodenstreifen, die auf diese weise ein Gitter von Spalten und Zeilen bilden. Durch ein sequentielles Abtasten der Spalten und Zeilen mittels eines elektrischen Signals erfolgt eine Messung der Kapazität an den Kreuzungspunkten. Die gemessene Kapazität ist aufgrund des elastischen Dielektrikums abhängig von der jeweiligen Belastung, d.h. vom jeweiligen Druck. Auf diese Weise lässt sich eine Abbildung der Druckverteilung auf einen Bereich wie des vorgenannten Gitters erstellen.

Nachteilig an diesem textilen Drucksensor ist eine Beschränkung auf im wesentlichen rechteckige Formen sowie ein relativ hoher verfahrensmässiger Aufwand zur Messung der jeweiligen Kapazitäten.

Der vorliegenden Erfindung liegt daher die Aufgabe zugrunde, einen textilen Drucksensor anzugeben, dessen Sensorflächengestalt frei auf die jeweilige Anwendung angepasst werden kann und auf einfache Weise eine Messung der jeweiligen Kapazitäten ermöglicht.

Diese Aufgabe wird erfindungsgemäss durch die im Anspruch 1 angegebenen Merkmale gelöst.

Bei der vorliegenden Erfindung handelt es sich um einen rein textilen Drucksensor mit dem die Druckverteilung auf einer beliebig strukturierten Fläche gemessen werden kann. Bei einem solchen Sensortextil, das aus einer Mehrzahl textiler Kondensatoren aufgebaut ist, ändert die Kapazität dieser Sensoren bzw. Elektroden in Abhängigkeit des Drucks. Dabei kann die Gestalt der einzelnen flächigen Kondensatoren frei gewählt werden. Dadurch ist auch eine freie Wahl der Gestalt der Gesamtheit aller einzelnen flächigen Kondensatoren auf einfache Weise möglich.

Im Sinne dieser Schrift werden die Begriffe «Textiler Drucksensor» und «Sensortextil» synonym verwendet, abgekürzt ist nachstehend ist teilweise auch nur von «Sensor» allein die Rede.

Eine ausserhalb des erfindungsgemässen textilen Drucksensors angeschlossene Messelektronik misst die Kapazität der einzelnen Kondensatoren bzw. Elektroden, wandelt die gemessenen Kapazitätswerte in Druckwerte um und leitet diese zur Verarbeitung oder Darstellung an eine weitere Einheit weiter.

Weitere vorteilhafte Ausgestaltungen der vorliegenden Erfindung sind in abhängigen Ansprüchen aufgeführt.

Die Erfindung wird nachfolgend anhand der Zeichnung beispielsweise näher erläutert. Dabei zeigt:
- Figur 1: Ansicht auf eine Gestalt eines textilen Drucksensors und Prinzipschema;
- Figur 2: Struktureller Aufbau eines textilen Drucksensors.

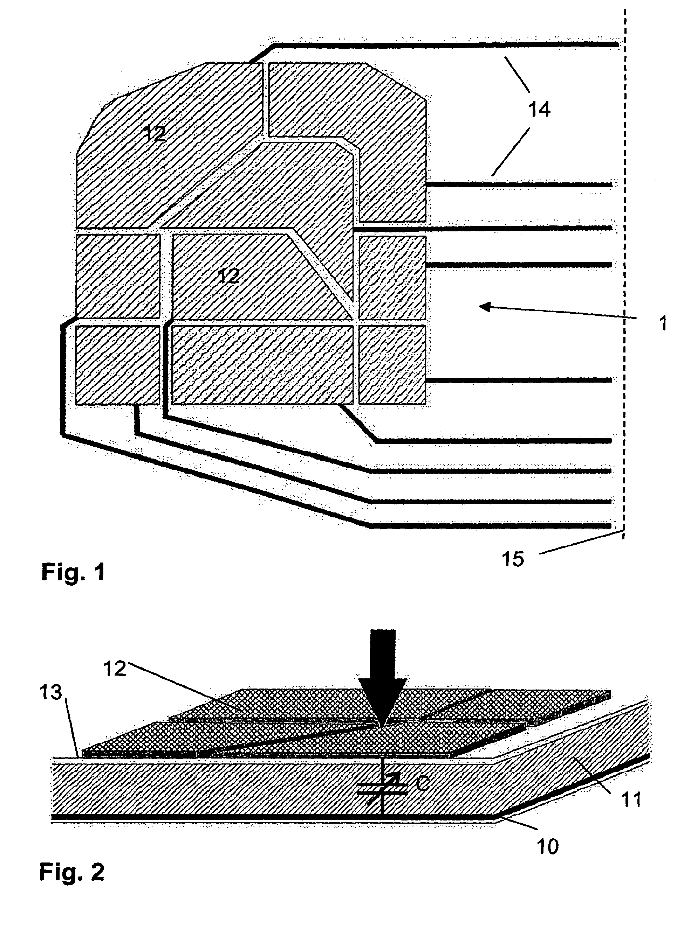

Figur 2 zeigt den struktureller Aufbau, nämlich drei Schichten 10, 11 und 13. Die unterste Schicht 10 ist ein vollflächig leitendes Textil, das eine (untere oder erste) flächige Elektrode bildet. Die oberste Schicht 13 ist ein nicht leitendes Textil, auf dem eine Mehrzahl von leitfähigen (weiteren) Elektroden 12 aufgebracht ist. Diese Elektroden 12 können mit leitfähigem Garn eingestickt oder mit leitfähigen Stoffen aufgedruckt sein. Dazwischen befindet sich ein Abstandhalter 11, ein reversibel komprimierbarer Schaumstoff oder Filz oder jegliches anderes geeignetes elastisches Material. Alternativ kann die untere (erste) «grossflächige» Elektrode analog der oberen strukturiert werden, um eine höhere Genauigkeit bzw. Auflösung zu erzielen (weniger Streufelder). Möglich ist auch, dass die leitende Textilfläche nur unter den Elektroden angebracht und nicht auf der gesamten Unterseite des Sensortextils 1. Der verbleibende Rest der Unterseite kann mit nicht leitendem Textil ausgeführt sein.

Die Anforderungen an das zu verwendende elastische Material, z.B. ein komprimierbarer Schaumstoff, richten sich nach der konkreten Anwendung des erfindungsgemässen textilen Drucksensors. Wichtig ist, dass dieses Material aufgrund einer Kompression vollständig reversibel entspannt. Die sogenannte Expansionszeit kann in einem weiten Bereich liegen, die Intervalle zur erneuten Messung durch die angeschlossene Messelektronik sind vorzugsweise länger als die mutmassliche Expansionszeit.

Die Funktionsweise des erfindungsgemässen textilen Drucksensors 1 wird anhand der Figur 2 erläutert: Wird ein Druck auf eine Stelle der Sensorfläche ausgeübt, wird der Abstandhalter 11 an der betreffenden Stelle zusammengedrückt und der Abstand zwischen der unteren 10 und der entsprechenden oberen Elektrode 12 wird verringert. Dieser Abstand ist abhängig von der Stärke des Drucks und dem verwendeten Abstandhalter 11.

Durch die Veränderung dieses Abstandes ändert die Kapazität C zwischen oberer 12 und unterer Elektrode 10. Mit einer externen Messelektronik wird diese Kapazität C gemessen. Daraus kann der Druck auf jedes einzelne Element, d.h. Elektrode 12 der Sensorfläche berechnet werden. Dazu ist jede obere Elektrode 12 mit einer Bahn 14 aus leitendem Material mit dem Stoffrand 15 verbunden. Die Bahn 14 kann wiederum aufgestickt oder bedruckt sein. Für bestimmte Anwendungen kann die Verbindung 14 von den Elektroden 12 auch mit normalem isoliertem Draht erfolgen, der mit nicht leitendem Garn auf den Stoff aufgestickt wird. Am Stoffrand werden die Bahnen 14 bzw. der Draht mit der externen Messelektronik kontaktiert. Das Sensortextil selbst enthält keine Elektronik, sämtliche Messelektronik wird extern angeschlossen. Dadurch wird die Strapazierfähigkeit und Zuverlässigkeit erhöht und das Textil ist problemlos waschbar. Dies ist besonders vorteilhaft, wenn ein solcher textiler Drucksensor in einem Kleidungsstück integriert, z.B. eingenäht ist.

Das elastische Material wird bezüglich der vorerwähnten Kondensatoren als Dielektrikum mit einer materialspezifischen relativen Dielektrizitätskonstante ε_{*r*} gebildet. Allfällige Änderungen von ε_{*r*} bei unterschiedlicher Kompression können durch die Auswerteelektronik entsprechend kompensiert werden. Um den Einfluss von Feuchte, insbesondere bei Anwendung für ein Kleidungsstück zu reduzieren, kann ein hydrophobes elastisches Material vorgesehen werden. Ebenso ist es möglich, den erfindungsgemässen textilen Drucksensor unten und/oder oben mit einer feuchtigkeitsundurchlässigen Schutzschicht zu versehen.

Die Erfindung ist jedoch nicht auf die eingangs erwähnte Anwendung für Anti-Decubitus Kleidung beschränkt. Nachfolgend werden weitere nicht abschliessend aufgezählte Anwendungsbeispiele gegeben:
i) Künstliche Haut für Roboter zur Nachbildung taktiler Sinne.
ii) Druckempfindliche Bodenbeläge, um eine Bewegung eines Objektes oder eine Belastung oder eine Belastungsänderung eines Bodens in einem Gebäude differenziert feststellen zu können.
iii) Adaptive Sitze für Anwendung in einem Flugzeug, Führerstand oder im privaten Bereich; adaptiv meint eine Anpassung an eine zu erreichende Verteilung der von der sitzenden Person auf den Sitz ausgeübten Druck.

### Liste der verwendeten Bezugszeichen

- 1: Textiler Drucksensor, Sensortextil
- 10: Flächige erste Elektrode, vollflächig leitendes Textil
- 11: Abstandhalter, reversibel komprimierbarer Stoff, Filz oder Schaumstoff
- 12: Weitere Elektroden
- 13: nichtleitendes Textil
- 14: Verbindungsleitung von einer weiteren Elektrode zum Stoffrand, zur Stoffperipherie
- 15: Stoffrand, Stoffperipherie

### Liste der verwendeten Akronyme

- C: Kondensator, Kapazität

### Liste der referenzierten Schriften

### [1] EP 1 211 633 A1

Textile-like capacitive pressure sensor and method of mapping the pressure exerted at points of a surface of a flexible and pliable object, particularly of a sail
STMicroelectronics S.R.1.
IT - 20041 Agrate Brianza MI

## Patentansprüche

1. Textiler Drucksensor (1), der gebildet wird aus einer ersten flächigen Elektrode (10) und einer Mehrzahl von weiteren, gegenüber der ersten Elektrode angeordneten und durch ein elastisches Material (11) individuell gehaltenen, weiteren Elektroden (12);
**dadurch gekennzeichnet, dass**
jede weitere Elektrode (12) bezüglich der ersten flächigen Elektrode (10) disjunkt angeordnet ist und je eine Verbindungsleitung (14) aufweist.

2. Textiler Drucksensor (1) nach Anspruch 1,
**dadurch gekennzeichnet, dass**
jede weitere Elektrode (12) bezüglich der ersten flächigen Elektrode 10) planparallel gehalten ist.

3. Textiler Drucksensor (1) nach Anspruch 1 oder 2,
**dadurch gekennzeichnet, dass**
das elastische Material (11) sich aufgrund einer Kompression vollständig entspannt.

4. Textiler Drucksensor (1) nach einem der Ansprüche 1 bis 3,
**dadurch gekennzeichnet, dass**
die weiteren Elektroden (12) durch Aufsticken eines leitenden Drahtes auf das elastische Material (11) gebildet werden.

5. Textiler Drucksensor nach Anspruch 4,
**dadurch gekennzeichnet, dass**
die Verbindungsleitung (13) aus dem gleichen Draht wie die zugehörige weitere Elektrode (12) gebildet wird.

6. Textiler Drucksensor nach einem der Ansprüche 1 bis 3,
**dadurch gekennzeichnet, dass**
die weiteren Elektroden (12) durch Aufdrucken eines leitfähigen Stoffes auf das elastische Material (11) gebildet werden.

7. Textiler Drucksensor nach einem der Ansprüche 1 bis 6,
**dadurch gekennzeichnet, dass**
das elastische Material (11) hydrophob ist.

8. Textiler Drucksensor nach einem der Ansprüche 1 bis 7,
**dadurch gekennzeichnet, dass**
auf einer oder auf beiden Seiten des Drucksensors eine feuchtigkeitsundurchlässige Schicht angebracht ist.
